(19) Europäisches Patentamt / European Patent Office / Office européen des brevets

(11) **EP 2 408 088 A2**

(12) **EUROPEAN PATENT APPLICATION**

(43) Date of publication:
**18.01.2012 Bulletin 2012/03**

(51) Int Cl.:
***H02J 9/00*** (2006.01)

(21) Application number: **11157833.2**

(22) Date of filing: **11.03.2011**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME** | (71) Applicant: **Kabushiki Kaisha Toshiba**<br>**Tokyo 105-8001 (JP)** |
| | (72) Inventor: **Iwata, Shigeyasu**<br>**Tokyo 105-8001 (JP)** |
| (30) Priority: **23.06.2010 JP 2010143177** | (74) Representative: **Henkel, Breuer & Partner**<br>**Patentanwälte**<br>**Maximiliansplatz 21**<br>**80333 München (DE)** |

(54) **Electronic apparatus and power control device**

(57)    According to embodiments, there is provided an electronic apparatus including: a first power source (97) configured to supply power in ON/Off-switchable manner; a driving module configured to drive a current for on/off-switching the first power source; a control module (110) configured to control the driving module to drive the current for on/off-switching the first power source; a second power source (205) configured to be charged from the first power source while the first power source is on, and to supply the control module with the charged power while the first power source is off; and a third power source (205) configured to be charged from the first power source while the first power source is on, and to supply the driving module with the charged power while the first power source is off, the third power source being independent from the second power source, wherein, while the first power source is off, a power amount that the second power source can supply is larger than a power amount that the third power source can supply.

EP 2 408 088 A2

**Description**

CROSS-REFERENCE TO RELATED APPLICATION(S)

This application is based upon and claims the benefit of priority from Japanese Patent Application No. 2010-143177, filed on June 23, 2010, the entire contents of which are incorporated herein by reference.

FIELD

Embodiments described herein relate generally to an electronic apparatus and a power control device which control supply of power.

BACKGROUND

Many of recent electronic apparatus have an operative state in which almost all functional sections operate and a standby state in which only certain functional sections operate (as described in, for example, JP-2004-274897-A). In the operative state, a main power source may supply power to almost all functional sections. On the other hand, in the standby state, the main power source may supply no power to the non-operating functional sections and an auxiliary power source may supply power to the certain functional sections. In many cases, whether to supply power from the main power source is controlled by switching on or off the contact of a relay disposed in a power supply path.

To lower the standby power dissipated in the standby state, an accumulation power source which is charged by power supplied from the main power source may be used as the auxiliary power source for the standby state. In this case, the following operation is performed. When the electric energy stored in the accumulation power source has become unduly low, the accumulation power source is temporarily supplied with power from the main power source even in the standby state. Charging is restarted and the electric energy stored in the accumulation power source is increased. When the electric energy stored in the accumulation power source has reached a predetermined level, the supply of power from the main power source is stopped and a transition is made to the ordinary standby state in which the accumulation power source operates as the secondary power source.

That is, in the standby state, the relay disposed in the power supply path is switched on or off depends on the time that is taken until the electric energy stored in the accumulation power source decreases to a predetermined level (i.e., the discharged time of the accumulation power source). For example, an electric double-layer capacitor may be used as an accumulation power source.

However, a contact failure may occur in the relay when the number of times of on/off switching of the relay contact has reached a number of times of endurance. The period until occurrence of a contact failure of the relay is proportional to the time that is taken until the electric energy stored in the accumulation power source decreases to the predetermined level (i.e., the discharged time of the accumulation power source). Therefore, in a case where an accumulation power source is used as a power source to be used in a standby state, it is preferable to take the time that is taken until the electric energy stored in the accumulation power source decreases to a predetermined level (i.e., the discharged time of the accumulation power source) into consideration.

BRIEF DESCRIPTION OF THE DRAWINGS

A general architecture that implements the various feature of the present invention will now be described with reference to the drawings. The drawings and the associated descriptions are provided to illustrate embodiments of the present invention and not to limit the scope of the present invention.

Fig. 1 is a block diagram showing the configuration of a TV receiver which is an electronic apparatus according to an embodiment.

Fig. 2 is a system configuration diagram of blocks which perform power control processing according to the embodiment.

Fig. 3 is a flowchart of one power control process which is executed in a state that main power is off.

Fig. 4 is a flowchart of one power control process which is executed in a state that the main power is made on to charge an accumulation unit A (and an accumulation unit B).

Fig. 5 shows a specific example of optimization of the capacitances of capacitors C1 and C2 provided in the respective accumulation units A and B.

Fig. 6 is a timing chart of power control processing which is performed by a power section and a power control section of the embodiment.

DETAILED DESCRIPTION

In general, according to one embodiment, there is provided an electronic apparatus including: a first power source configured to supply power in ON/Off-switchable manner; a driving module configured to drive a current for on/off-switching the first power source; a control module configured to control the driving module to drive the current for on/off-switching the first power source; a second power source configured to be charged from the first power source while the first power source is on, and to supply the control module with the charged power while the first power source is off; and a third power source configured to be charged from the first power source while the first power source is on, and to supply the driving module with the charged power while the first power source is off, the third power source being independent from the second power source, wherein, while the first power source is off, a power amount that the second power source can supply is larger than a power amount that the third power source can supply.

An embodiment will be hereinafter described with reference to the drawings.

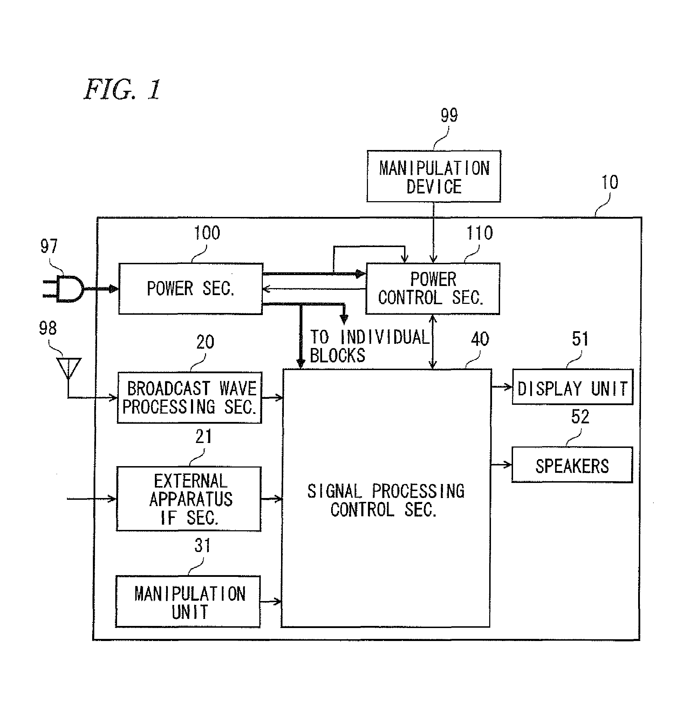

Fig. 1 is a block diagram showing the configuration of a TV receiver 10 which is an electronic apparatus according to the embodiment. The TV receiver 10 performs a power supply control for plural blocks provided therein.

In the embodiment, a state that almost all blocks of the TV receiver 10 are supplied with power to be operative is defined as an operative state. And, a state that only certain blocks are supplied with power to be operative is defined as a standby state. The operative state and the standby state may be also called as a state that the power of the TV receiver 10 is on and a state that the power of the TV receiver 10 is off, respectively.

The TV receiver 10 includes a broadcast wave processing section 20, an external apparatus IF section 21, a manipulation unit 31, a signal processing control section 40, a display unit 51, speakers 52, a power section 100, a power control section 110, etc. An antenna 98 is connected to the broadcast wave processing section 20. The power section 100 is connected to a plug 97 which is connected to a home socket or the like. The power control section 110 exchanges information with a manipulation device 99. For example, the manipulation device 99 may be an infrared remote controller or a radio communication device for remotely controlling the TV receiver 10, and is equipped with a power key (not shown) for on/off-switching the power of the TV receiver 10.

The TV receiver 10 receives external power that is supplied from a home socket or the like via the plug 97. The TV receiver 10 generates plural kinds of power for plural blocks provided therein by performing predetermined conversion processing on the external power.

In the following description, among the plural kinds of power generated by the power section 100, on/off-switchable power that is supplied to almost all blocks in the operative state will be referred to as main power. For example, the supply of the main power is on/off-switched by a manipulation of the user of the TV receiver 10. The on/off switching of the supply of the main power is simply referred to as on/off switching of the main power. Furthermore, in the following description, among the plural kinds of power generated, power that is supplied to only particular blocks in the standby state will be called auxiliary power.

As described later in detail, to on/off-switch the main power, the power section 100 uses a relay which is an opening/closing component for opening or closing a power supply path. In general, such a relay can endure a limited number of opening/closure switching operations. That is, if the supply of the main power is on/off-switched frequently, the number of opening/closure switching operations of the relay reaches a predetermined endurable number of times in a short period. According to the embodiment, the main power is prevented from being on/off-switched frequently.

The power section 100 produces plural kinds of power including the main power and the auxiliary power by performing predetermined conversion processing on external power that is supplied via the plug 97. The power section 100 performs switching processing of switching on/off the supply of the main power in the above-described manner under the control of the power control section 110. The main power generated by the power section 100 is supplied to plural blocks including the signal processing control section 40. The power section 100 generates two kinds of auxiliary power, both of which are supplied to the power control section 110.

The power control section 110 outputs, to the signal processing control section 40, manipulation information corresponding to a signal that is input from the manipulation device 99. The power control section 110 exchanges information relating to the switching processing of the power section 100 with the signal processing control section 40. The power control section 110 outputs, to the power section 100, control information for the power switching processing of the power section 100 according to a signal that is input from the manipulation device 99 and information received from the signal processing control section 40. The power control section 110 operates on the two kinds of auxiliary power generated by the power section 100. Furthermore, the power control section 110 monitors the statuses (for example, sufficiency or insufficiency in a remaining power) of the two kinds of auxiliary power supplied from the power section 100. In the embodiment, the power control section 110 monitors the status of one of the two kinds of auxiliary power.

As described above, the power section 100 receives external power and generates plural kinds of power including the main power and the two kinds of auxiliary power. The power control section 110 operates on the two kinds of auxiliary power and controls the on/off switching of the main power by outputting control information to the power section 100. Furthermore, the power control section 110 monitors the status of one of the two kinds of auxiliary power on which the power control section 110 itself operates. That is, the switching processing of on/off-switching the main power is performed by the power section 100 according to the status of the one kind of auxiliary power being monitored by the power control section 110. One feature of the embodiment is to prevent the switching processing from being performed frequently.

Almost all of the blocks which will be described below operate on the main power generated by the power section 100.

The broadcast wave processing section 20 has tuners and demodulators for processing terrestrial/satellite digital/analog broadcast waves received by the antenna 98. The broadcast wave processing section 20 receives reception signals of the antenna 98 and performs processing of tuning into a reception signal on a particular channel among the reception signals, demodulation processing, etc. The broadcast wave processing section 20 outputs, to the signal processing control section 40, a transport stream signal (TS signal) that is obtained by the above processing and contains video/audio information and other information of a program.

The external apparatus IF section 21 has information extracting sections for extracting information according to various standards such as the HDMI (registered trademark) standard, the USB standard, and the IEEE 1394 standard. The external apparatus IF section 21 outputs, to the signal processing control section 40, a TS signal that is extracted from information received from any of external apparatus and storage media such as an external HDD and a memory card that are connected via connection terminals compatible with the above standards. The external apparatus IF section 21 may receive analog video/audio signals from a connected external apparatus. In this case, the external apparatus IF section 21 A/D-converts the received video/audio signals and outputs resulting digital video/audio signals to the signal processing control section 40.

The manipulation unit 31 has plural manipulation keys, and outputs manipulation information corresponding to a manipulation of each manipulation key to the signal processing control section 40. For example, the manipulation unit 31 has a power key (not shown) for powering on/off the TV receiver 10.

The signal processing control section 40 performs plural kinds of processing using blocks provided in itself or connected to it. For example, when receiving power-on or off manipulation information from the manipulation unit 31 or from the manipulation device 99 via the power control section 110, the signal processing control section 40 performs information storage and reading to be performed in association with a power-on or off operation. Furthermore, the signal processing control section 40 performs predetermined processing on a TS signal that is input from a selected input source and outputs a resulting video signal and audio signal to the display unit 51 and the speakers 52, respectively.

The display unit 51 is a display module which includes a display panel for displaying a video signal that is input from the signal processing control section 40. The display unit 51 may be a flat panel display such as an LCD (liquid crystal display).

The speakers 52 output, as a sound, an audio signal that is input from the signal processing control section 40. The speakers 52 may consist of two speakers (left-channel and right-channel speakers) and, if necessary, a subwoofer for outputting a low-frequency part of an input audio signal.

In addition to the above-described plural blocks, the TV receiver 10 may be equipped with a block (not shown) for implementing a network communication function for performing a communication over a network such as a LAN or a WAN. This block receives such information as video/audio information of a content from an information providing source such as a particular server or a recording medium located on the other side of a connected network, and outputs a TS signal that is based on the received information to the signal processing control section 40.

The TV receiver 10 may also be equipped with an ODD (optical disc drive; not shown) which reads information from and/or writes information to an optical disc. The ODD reads such information as video/audio information of a content from an optical disc and outputs a TS signal that is based on the read-out information to the signal processing control section 40.

The embodiment is such that features characterizing the invention are applied to the TV receiver 10 as an electronic apparatus. However, the features characterizing the invention may be applied to other electronic apparatus such as a personal computer, a portable mobile terminal device, an HDD/optical disc recorder, and a set-top box. Furthermore, the features characterizing the invention may be applied to electronic apparatus incorporating a power adaptor for supplying power to various electronic apparatus.

The above-configured plural blocks of the TV receiver 10 according to the embodiment of the invention perform plural kinds of processing. In particular, the power section 100 on/off-switches the main power to be supplied to almost all of the blocks of the TV receiver 10 under the control of the power control section 110. Furthermore, the power control section 110 monitors the status of one of the two kinds of auxiliary power that are supplied from the power section 100. As such, the TV receiver 10 according to the embodiment performs power control processing of on/off-controlling the main power according to the status of one of the two kinds of auxiliary power. This makes it possible to prevent the main power from being on/off-switched frequently. The power control processing on the plural kinds of power generated by the power section 100 is performed mainly by the power control section 110 and the signal processing control section 40 in a composite manner.

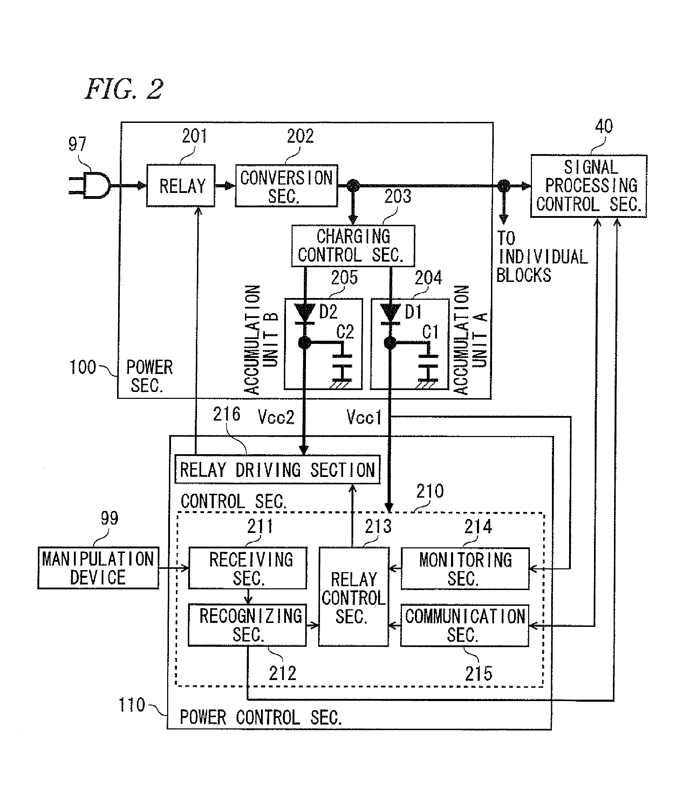

Next, individual blocks that are provided in the power section 100 and the power control section 110 described above with reference to Fig. 1 and that perform the power control processing will be described with reference to Fig. 2.

Fig. 2 is a system configuration diagram of the blocks which perform the power control processing according to the embodiment.

As described above, the power control processing is processing of controlling the on/off switching of the main power by the power section 100 according to the status of one of the two kinds of auxiliary power. That is, the power control processing is performed according to a result of monitoring of the status of off-time power by the power control section 110.

The power section 100 is equipped with a relay 201, a conversion section 202, a charging control section 203, an accumulation unit A 204, and an accumulation unit B 205. The power control section 110 is equipped with a control section 210 and a relay driving section 216. The control section 210 includes a receiving section 211, a recognizing section 212, a relay control section 213, a monitoring section 214, and a communication section 215.

First, the individual blocks of the power section 100 will be described in detail.

The relay 201 is an opening/closing component having a contact for opening or closing the power supply path from the plug 97 to the conversion section 202. The relay 201 opens or closes its contact according to control information that is input from the relay driving section 216 of the power control section 110. It is preferable that the relay 201 be disposed close to the plug 97 rather than the conversion section 202 in the power supply path. The relay 201 can endure a limited number of opening/closure switching operations. In the power control processing according to the embodiment, a control is performed so that opening/closure switching operations of the relay 201 are not performed frequently.

The conversion section 202 generates power having a predetermined voltage by performing voltage conversion processing such as AC/DC conversion and DC/DC conversion on external power that is supplied while the contact of the relay 201 is closed. The generated power having the predetermined voltage is the main power the supply of which is on/off-switched by opening/closure of the contact of the relay 201. The conversion section 202 supplies parts of the generated main power to almost all blocks of the TV receiver 10 including the signal processing control section 40. The conversion section 202 also supplies part of the generated main power to the charging control section 203 of the power section 100.

While the main power is on, the charging control section 203 performs charging processing of charging the accumulation unit A 204 and the accumulation unit B 205 from the main power supplied from the conversion section 202. The charging control section 203 does not perform charging processing while the main power is off, because it is supplied with no power from the conversion section 202. Even while the main power is on, the charging control section 203 does not perform charging processing if the accumulation unit A 204 has been charged beyond a predetermined capacity.

The accumulation unit A 204 and the accumulation unit B 205 are chargeable by the main power through charging processing of the charging control section 203 while the main power is on. Even while the main power is on, the accumulation unit A 204 and the accumulation unit B 205 are not charged and hence operate to supply part of the main power to the individual blocks of the power control section 110 if the accumulation unit A 204 has been charged beyond the predetermined capacity. While the main power is off, the accumulation unit A 204 and the accumulation unit B 205 serve as power sources for the individual blocks of the power control section 110, that is, supply stored electric energy to the individual blocks of the power control section 110.

In the embodiment, the accumulation unit A 204 is used as a power source for the control section 210 of the power control section 110. The accumulation unit A 204 is equipped with a diode D1 whose forward direction coincides with the power supply direction and a capacitor C1 which is provided between the cathode of the diode D1 and the ground. The accumulation unit B 205 is used as a power source for the relay driving section 216. The accumulation unit B 205 is equipped with a diode D2 whose forward direction coincides with the power supply direction and a capacitor C2 which is provided between the cathode of the diode D1 and the ground. Optimizing the capacitances of the capacitors C1 and C2 is a feature that characterizes the embodiment. The capacitor C1 may be a large-capacitance capacitor such as an electric double-layer capacitor and the capacitor C2 may be a small-capacitance capacitor such as a laminated capacitor.

Although as described above the power section 100 is equipped with the accumulation unit A 204 and the accumulation unit B 205, while the main power is off the electric energy that each of the accumulation unit A 204 and the accumulation unit B 205 can supply to the blocks of the power control section 110 is restricted. When the capacity of the accumulation unit A 204 or the accumulation unit B 205 has become unduly low, the main power needs to be turned on to increase its capacity.

Next, the individual blocks of the power control section 110 will be described in detail.

The receiving section 211 receives a signal containing information for manipulating the TV receiver 10 from the manipulation device 99, and outputs information obtained by performing predetermined processing on the received signal to the recognizing section 212. For example, where the manipulation device 99 is an infrared remote controller, the receiving section 211 performs photoelectric conversion on an infrared signal transmitted from the manipulation device 99 and outputs resulting information to the recognizing section 212. The receiving section 211 may send the manipulation device 99 information indicating an operation status of the TV receiver 10 that is received by the communication section 215 by communicating with the signal processing control section 40.

The recognizing section 212 recognizes the information that is input from the receiving section 211 and produces a recognition result. If necessary, the recognizing section 212 refers to a status of control of the relay 201 by the relay control section 213. The control status indicates whether the relay control section 213 is controlling the relay 201 so as to open or close the contact of the relay 201. The recognizing section 212 outputs manipulation information corresponding to a recognition result and a reference result to the relay control section 213 or the signal processing control section 40. The manipulation information that is output to the relay control section 213 serves as switching information for opening or closing the relay 201.

The relay control section 213 outputs, to the relay driving section 216, drive information for on/off-switching the main power based on switching information that is input from the recognizing section 212 or the communication section 215. Furthermore, the relay control section 213 outputs, to the relay driving section 216, drive information for closing the contact of the relay 201 (i.e., for turning on the main power) according to a monitoring result indicating a status of the one power source that is communicated from the monitoring section 214. The relay control section 213 manages, as control status information, information indicating whether drive information that has been output is to turn on the main power or to turn it off. The relay control section 213 outputs such control status information in response to reference from the recognizing section 212.

The monitoring section 214 monitors the status of the voltage Vcc1 of the one power source, and communicates information indicating a monitoring result to the relay control section 213. The accumulation unit A 204 which generates the one auxiliary power to be monitored is a power source for supplying power to the control section 210. The monitoring section 214 monitors the actual on/off status at a predetermined cycle based on a clock signal having a predetermined frequency that is generated by a clock signal generating block (not shown). For example, the monitoring section 214 monitors the voltage Vcc1 of the one auxiliary power and detects an event that the monitoring subject voltage has become lower than or equal to a predetermined value. This is done by judging a digital value obtained by converting a voltage of the one auxiliary power. It is preferable that the monitoring section 214 start monitoring after a lapse of a predetermined time from a time point when the relay control section 213 output, to the relay drive section 216, drive information for turning off the main power.

The communication section 215 exchanges information with a communication section of the signal processing control section 40. When receiving information indicating that turning-off of the main power is permitted, the communication section 215 outputs switching information corresponding to this information to the relay control section 213.

The relay driving section 216 is supplied with the other auxiliary power having a voltage Vcc2 from the batter unit B 205. The relay driving section 216 outputs, to the relay 201, control information for opening or closing the contact of the relay 201 (i.e., for turning on or off the main power) according to drive information that is input from the relay control section 213. Power is supplied to the relay 201 from the accumulation unit B 205 (which generates the other auxiliary power) in the form of the control information that is output from the relay driving section 216.

Since the power control section 110 monitors the status of the one auxiliary power in the above-described manner, it can recognize that the voltage of the accumulation unit A 204 (i.e., the electric energy that the accumulation unit A 204 can supply) is low. In this case, the electric energy that each of the accumulation unit A 204 and the batter unit B 205 can supply (i.e., the electric energy stored in each of the accumulation unit A 204 and the batter unit B 205) can be increased by the power control section 110's controlling the power section 100 so that the main power is turned on. For example, in a configuration in which the receiving section 211 receives signal-carrying light emitted from an infrared remote controller which is the manipulation device 99, there may occur an event that unnecessary photoelectric conversion is performed and the current consumption increases if the receiving section 211 receives sunlight. In such a situation, the electric energy stored in the accumulation unit A 204 is consumed earlier (i.e., its discharge time is shortened) and the main power may be switched on/off at short intervals to charge the accumulation unit A 204 and the accumulation unit B 205. In the embodiment, to avoid such an event, the capacitances of the capacitors C1 and C2 are optimized. Thus, a discharge time of the accumulation unit A 204 is suitably adjusted.

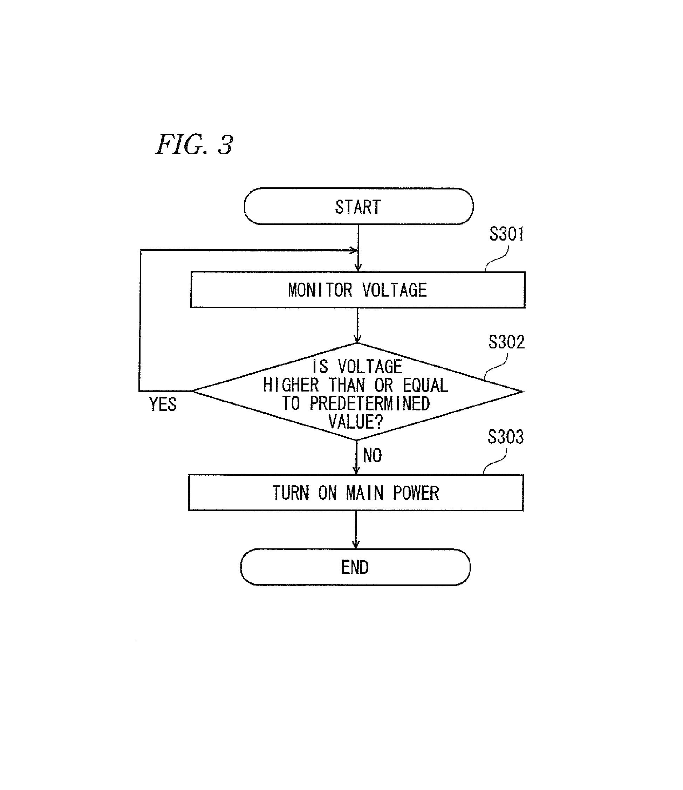

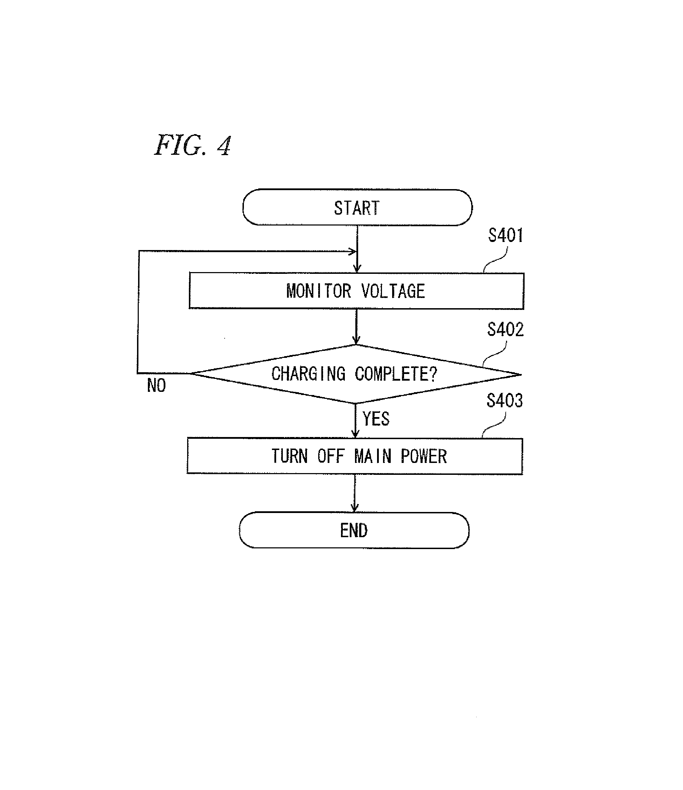

Next, power control processes which are executed by the power section 100 and the power control section 110 (described above with reference to Fig. 2) according to a monitoring result of the one auxiliary power having the voltage Vcc1 will be described with reference to Figs. 3 and 4.

Fig. 3 is a flowchart of one power control process which is executed in a state that the main power is off.

In a state that the main power is off, that is, the power control section 110 is operating on the two kinds of auxiliary power supplied from the accumulation unit A 204 and the accumulation unit B 205, at step S301 the monitoring section 214 monitors the voltage Vcc1 of the one auxiliary power supplied from the accumulation unit A 204. At step S302, the monitoring section 214 judges whether or not the voltage Vcc1 is higher than or equal to a predetermined value. If the voltage Vcc1 is higher than or equal to the predetermined value (S302: yes), the process returns to step S301. If the voltage Vcc1 is lower than the predetermined value (S302: no), at step S303 the monitoring section 214 communicates the monitoring result to the relay control section 213. Receiving the monitoring result, the relay control section 213 outputs, to the relay driving section 216, drive information for closing the contact of the relay 201 (i.e., for turning on the main power). Receiving the drive information, the relay driving section 216 outputs control information for turning on the main power to the relay 201. As a result, the contact of the relay 201 is closed and the main power is turned on. This control makes it possible to keep the voltage Vcc1 of the accumulation unit A 204 higher than or equal to the predetermined value.

Fig. 4 is a flowchart of one power control process which is executed in a state that the main power is made on to charge the accumulation unit A 204 (and the accumulation unit B 205).

In a state that the main power is made on to charge the accumulation unit A 204 (and the accumulation unit B 205), at step S401 the monitoring section 214 monitors the voltage Vcc1 of the accumulation unit A 204. At step S402, the monitoring section 214 judges whether or not the charging of the accumulation unit A 204 has been completed. If the charging has not been completed yet (S402: no), the process returns to step S401. If charging has been completed (S402: yes), at step 403 the monitoring section 214 communicates the monitoring result to the relay control section 213. Receiving the monitoring result, the relay control section 213 outputs, to the relay driving section 216, drive information for opening the contact of the relay 201 (i.e., for turning off the main power). Receiving the drive information, the relay driving section 216 outputs control information for turning off the main power to the relay 201. As a result, the contact of the relay 201 is opened and the main power is turned off. This control makes it possible to avoid an event that the main power is kept on uselessly in the standby state.

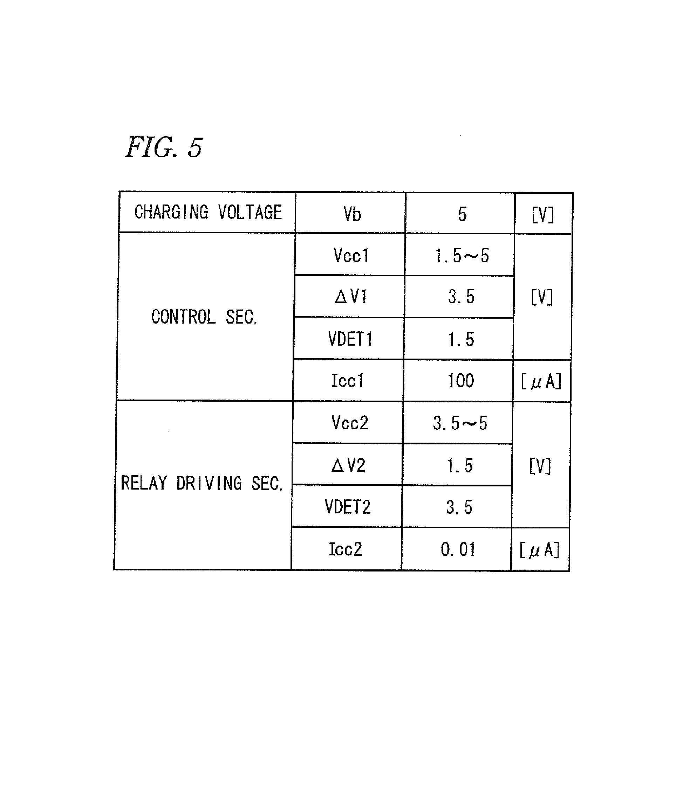

Next, a specific example of how the capacitances of the capacitors C1 and C2 provided in the accumulation unit A 204 and the accumulation unit B 205, respectively, are optimized to suitably adjust a discharge time of the accumulation unit A 204 will be described with reference to Fig. 5.

Fig. 5 shows a specific example of optimization of the capacitances of the capacitors C1 and C2 provided in the accumulation unit A 204 and the accumulation unit B 205, respectively.

As described above, the two kinds of auxiliary power generated by the accumulation unit A 204 and the accumulation unit B 205 are supplied to the control section 210 and the relay driving section 216, respectively. The control section 210 consumes predetermined amounts of currents such as a self-bias current of the receiving section 211 which serves to receive a signal coming from the manipulation device 99 and an operation current of an A/D conversion block of the monitoring section 214. On the other hand, the relay driving section 216 mainly consumes a current mainly in a switching operation for opening or closing the contact of the relay 201 and consumes almost no current in a state that the contact of the relay 201 is not switched on or off. For example, the relay driving section 216 includes FETs, transistors, etc. This form of current consumption typically occurs when the relay 201 is a latching relay. That is, the accumulation unit A 204 is required to have a higher power (current) drive ability than the accumulation unit B 205 is.

The individual block provided in the control section 210 operate not on the auxiliary power having the voltage Vcc1 which is supplied from the accumulation unit A 204 but on constant-voltage power having a predetermined voltage which is supplied from a regulator (not shown) which receives the auxiliary power having the voltage Vcc1. The regulator is provided inside or outside the control section 210. The minimum value of the voltage Vcc1 that enables operation of the control section 210 can be reduced by employing a regulator having a low-saturation input/output voltage characteristic. On the other hand, since the minimum value of the voltage Vcc2 that enables operation of the relay driving section 216 (or the relay 201) is determined by the characteristic of the relay 201, it is difficult to lower the minimum value by optimizing the circuit configuration of the relay driving section 216.

In the specific example of Fig. 5, the charging voltage of each of the accumulation unit A 204 and the accumulation unit B 205 which are charged by the charging control section 203 is equal to 5 V. A range of the voltage Vcc1 in which the control section 210 can operate is 1.5 to 5 V, and an operative voltage range $\Delta V1$ which is the difference between the upper limit and the lower limit of this voltage range is 3.5 V. A minimum voltage DET1 at which the control section 210 can operate is 1.5 V. A current consumption Icc1 of the control section 210 is 100 uA.

A range of the voltage Vcc2 in which the relay driving section 216 can operate is 3.5 to 5 V, and an operative voltage range $\Delta V2$ which is the difference between the upper limit and the lower limit of this voltage range is 1.5 V. A minimum voltage DET2 at which the relay driving section 216 can operate is 3.5 V. A current consumption Icc2 of the relay driving section 216 is 0.01 uA. The characteristics relating to the voltage and the current of the relay driving section 216 correspond to those relating to the relay 201.

Requirements that the power sources for the control section 210 and the relay driving section 216 having the above characteristics should satisfy will be described below.

A maximum allowable voltage drop from the charging voltage 5 V of the accumulation unit A 204 which is the voltage source for the control section 210 is equal to the operative voltage range $\Delta V1$ (= 3.5 V). On the other hand, a maximum allowable voltage drop from the charging voltage 5 V of the accumulation unit B 205 which is the voltage source for the relay driving section 216 is equal to the operative voltage range $\Delta V2$ (= 1.5 V). Therefore, the capacitors C1 and C2 provided in the accumulation unit A 204 and the accumulation unit B 205 are required to have capacitances capable of making the voltage drops as low as 3.5 V and 1.5 V, respectively.

As mentioned above, the current consumption Icc1 of the control section 210 which is the load of the accumulation unit A 204 is 100 uA and the current consumption Icc2 of the relay driving section 216 which is the load of the accumulation unit B 205 is 0.01 uA. If the control section 210 and the relay driving section 216 had the same operation voltage range, the discharge time of the accumulation unit A 204 could be set approximately the same as that of the accumulation unit B 205 by making the capacitance of the capacitor C1 of the accumulation unit A 204 10, 000 (= 100/0.01) times that of the capacitor C2 of the accumulation unit B 205.

However, actually, in controlling the relay 201, the relay driving section 216 requires a drive current for driving a coil (not shown) for turning on or off the relay 201. Therefore, the accumulation unit B 205 should be stored with energy corresponding to this drive current and hence the energy corresponding to the drive current should be taken into consideration in determining the capacitance of the capacitor C2.

Incidentally, the operation voltage range $\Delta V1$ of the control section 210 which is the load of the accumulation unit A 204 is 3.5 V and the operation voltage range $\Delta V2$ of the relay driving section 216 which is the load of the accumulation unit B 205 is 1.5 V. Therefore, the discharge time of the accumulation unit A 204 is allowed to be 2.33 ($\approx$ 3.5/1.5) times as long as that of the accumulation unit B 205. This means that the discharge time of the accumulation unit A 204 can be set approximately the same as that of the accumulation unit B 205 even if the capacitance of the capacitor C1 is 4291.8 ($\approx$ 10,000/2.33) times that of the capacitor C2.

As described above, power sources that are suitable for the characteristics of the control section 210 and the relay driving section 216 can be constructed by providing those power sources separately for the control section 210 and the relay driving section 216. The sets of specific values shown in Fig. 5 are just examples, and it goes without saying that the invention is not limited to such a case.

The finding that the electric energy (charge) stored in a power source(s) can be used more efficiently when separate power sources are provided for the control section 210 and the relay driving section 216 than when the same power source is provided for them will be described below for the specific example of Fig. 5.

The magnitude relationship between the operation voltage range $\Delta V1$ of the control section 210 and the operation voltage range $\Delta V2$ of the relay driving section 216 is as follows:

$$\text{(operation voltage range } \Delta V1 \text{ of control section 210)}$$
$$> \text{(operation voltage range } \Delta V2 \text{ of relay driving section 216)}$$
$$\cdots\cdots (1)$$

And the magnitude relationship between the current consumption Icc1 of the control section 210 and the current consumption Icc2 of the relay driving section 216 is as follows:

$$\text{(current consumption Icc1 of control section 210)} \gg$$
$$\text{(current consumption Icc2 of relay driving section 216)}$$
$$\cdots\cdots (2)$$

First, a description will be made of the case that the same power source is provided for the control section 210 and the relay driving section 216.

Q represents an amount of charge that should be stored in such a power source. And assume that this power source is equipped with a capacitor C like the accumulation unit A 204 and the accumulation unit B 205 of the embodiment, and that the capacitance of the capacitor C is equal to the sum of the capacitances of the capacitors C1 and C2. A maximum allowable voltage drop $\Delta V$ is equal to the operation voltage range $\Delta V2$ of the relay driving section 216, which is smaller than the operation voltage range $\Delta V1$ of the control section 210. Therefore, the amount of charge Q that should be stored in this power source as calculated according to the following formula.

$$Q = C \times \Delta V = C \times \Delta V2 \quad \cdots\cdots (3)$$

Since the capacitance C is assumed to be the sum of the capacitances (represented by C1 and C2) of the capacitors C1 and C2 and the capacitance C1 is much larger than the capacitance C2, C x ΔV2 in Equation (3) can be approximated as C1 x ΔV2. Therefore, Equation (3) can be written as follows.
$$Q = C \times \Delta V = C \times \Delta V2 \approx C \times \Delta V2 \quad \cdots\cdots (3')$$

On the other hand, an amount of charge Q1 which is the sum of the amounts of charge that should be stored in the accumulation unit A 204 and the accumulation unit B205 of the embodiment is calculated according to the following formula:
$$Q1 = C1 \times \Delta V1 + C2 \times \Delta V2 \quad \cdots\cdots (4)$$

In the embodiment, since the capacitances of the capacitors C1 and C2 are set taking the relationship Icc1 » Icc2 (Inequality (2)) into consideration, a relationship (capacitance C1) » (capacitance C2) holds. Since ΔV1 > ΔV2 and C1 » C2, a magnitude relationship C1 x ΔV1 » C2 x ΔV2 holds and the right side of Equation (4) can be approximated as C1 x ΔV1. Therefore, Equation (4) can be rewritten as follows.
$$Q1 = C1 \times \Delta V1 + C2 \times \Delta V2 \approx C1 \times \Delta V1 \quad \cdots\cdots (4')$$

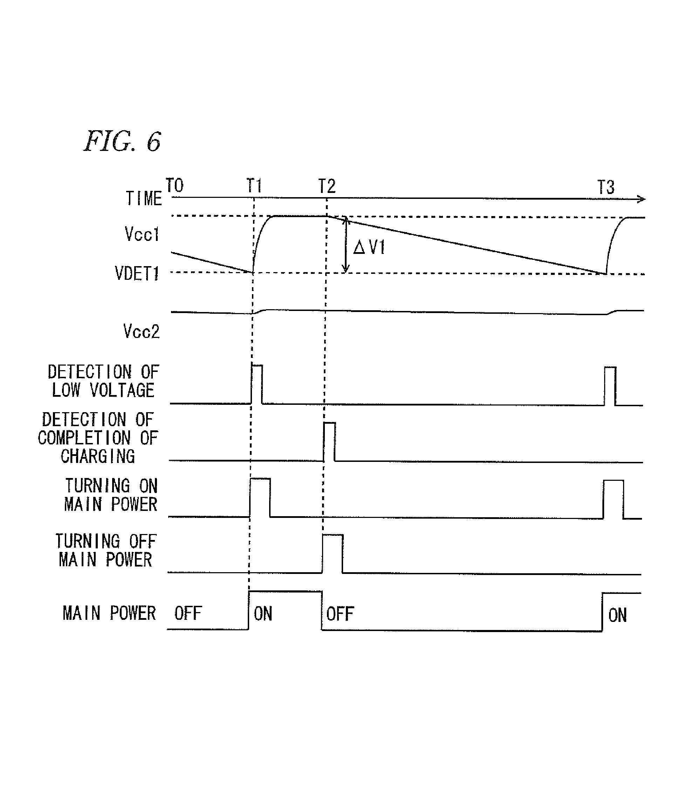

From Equations (3') and (4') and the magnitude relationship ΔV1 > ΔV2, an inequality Q < Q1 is obtained. That is, more electric energy (charge) can be stored in a power source(s) when separate power sources are provided for the control section 210 and the relay driving section 216 than when the same power source is provided for them. In the other words, the electric energy (charge) stored in a power source(s) can be used more efficiently when separate power sources are provided for the control section 210 and the relay driving section 216 than when the same power source is provided for them.
Next, example power control processing which is performed as time elapses by the power section 100 and the power control section 110 of the embodiment will be described with reference to Fig. 6.
Fig. 6 is a timing chart of power control processing which is performed by the power section 100 and the power control section 110 of the embodiment.
At time T0, the main power is on and the two kinds of auxiliary power are off. In this state, part of the charge stored in the capacitor C1 is supplied to the control section 210 from the accumulation unit A 204 which generates the auxiliary power to be supplied to the control section 210 and part of the charge stored in the capacitor C2 is supplied to the relay driving section 216 from the accumulation unit B 205 which generates the auxiliary power to be supplied to the relay driving section 216.
Also in the period from time T0 to time T1, the main power is kept on and the two kinds of auxiliary power are kept off. The voltage Vcc1 of the accumulation unit A 204 and the voltage Vcc2 of the accumulation unit B 205 decrease gradually at predetermined rates. Since the current consumption Icc1 of the control section 210 is larger than the current consumption Icc2 of the relay driving section 216, the decrease rate of the voltage Vcc1 is higher than that of the voltage Vcc2.
At time T1, the voltage Vcc1 of the accumulation unit A 204 which has decreased gradually reaches the minimum value VDET1. The monitoring section 214 which is monitoring the voltage Vcc1 judges that the voltage vcc1 is too low. Processing of turning on the main power is performed to charge the accumulation unit A 204 (and also charge the accumulation unit B 205 necessarily). The main power is thus turned on.
In the period from time T1 to time T2, the main power is on and the two kinds of auxiliary power are off (under charging). In this period, the accumulation unit A 204 and the accumulation unit B 205 are charged and hence the voltages Vcc1 and Vcc2 increase.

At time T2, the accumulation unit A 204 and the accumulation unit B 205 are charged fully and the voltages Vcc1 and Vcc2 are approximately equal to the maximum value. In particular, the voltage Vcc1 has been increased by the charging by the operation voltage range $\Delta$V1 from the minimum value VDET1 and is now approximately equal to the maximum value. The monitoring section 214 which is monitoring the voltage Vcc1 judges that the charging of the accumulation unit A 204 and the accumulation unit B 205 has been completed. Processing of turning off the main power is performed, whereby the main power is turned off.

In the period from time T2 to time T3, the main power is off and the two kinds of auxiliary power are on. That is, the power section 100 and the power control section 110 are in the same states as at time T0. Part of the charge stored in the capacitor C1 is again supplied to the control section 210 from the accumulation unit A 204 which generates the auxiliary power to be supplied to the control section 210

At time T3, the power section 100 and the power control section 110 are in the same states as at time T1. The voltage Vcc1 of the accumulation unit A 204 which has decreased gradually again reaches the minimum value VDET1. Based on the monitoring of the voltage Vcc1 by the monitoring section 214, processing of turning on the main power is performed to charge the accumulation unit A 204 (and also charge the accumulation unit B 205 necessarily). The main power is thus turned on.

In the above-described manner, the relay driving section 216 is supplied with power (auxiliary power) from the accumulation unit B 205. The control section 210 whose operation voltage range $\Delta$V1 is larger than the operation voltage range $\Delta$V2 of the relay driving section 216 is supplied with power (auxiliary power) from the accumulation unit A 204. Since the current consumption Icc1 of the control section 210 is larger than the current consumption Icc2 of the relay driving section 216, the discharge rate of the accumulation unit A 204 is higher than that of the accumulation unit B 205. However, the discharge times of the accumulation unit A 204 and the accumulation unit B 205 can be suitably adjusted by setting the capacitance of the capacitor C1 of the accumulation unit A 204 larger than that of the capacitor C2 of the accumulation unit B 205. The fact that the minimum value VDET1 of the voltage Vcc1 of the control section 210 is smaller than the minimum value VDET2 of the voltage Vcc2 of the relay driving section 216 also contributes to the realization of the suitably-adjusted discharge times of the accumulation unit A 204 and the accumulation unit B 205.

As described above, in the embodiment, the accumulation unit A 204 and the accumulation unit B 205 are constructed according to the minimum operative voltages and the current consumptions which are characteristics of the control section 210 and the relay driving section 216. The capacitance of the capacitor C1 of the accumulation unit A 204 and the capacitance of the capacitor C2 of the accumulation unit B 205 are set at values that are suitable for the characteristics of the control section 210 and the relay driving section 216. Therefore, an electronic apparatus and a power control device in which the charging times of the accumulation unit A 204 and the accumulation unit B 205 are suitably adjusted can be provided by the power control processes executed by the power section 100 and the power control section 110.

The invention is not limited to the above embodiment, and various changes, modifications, etc. are possible without departing from the spirit and scope of the invention. And various inventions can be conceived by properly combining plural constituent elements disclosed in the embodiment. For example, several ones of the constituent elements of the embodiment may be omitted.

**Claims**

1.  An electronic apparatus comprising:

    a first power source configured to supply power in ON/Off-switchable manner;
    a driving module configured to drive a current for on/off-switching the first power source;
    a control module configured to control the driving module to drive the current for on/off-switching the first power source;
    a second power source configured
    to be charged from the first power source while the first power source is on, and
    to supply the control module with the charged power while the first power source is off; and
    a third power source configured
    to be charged from the first power source while the first power source is on, and
    to supply the driving module with the charged power while the first power source is off, the third power source being independent from the second power source,
    wherein, while the first power source is off, a power amount that the second power source can supply is larger than a power amount that the third power source can supply.

**2.** The apparatus of Claim 1,
wherein a minimum operative voltage of the control module is lower than a minimum operative voltage of the driving module, and
wherein, while the first power source is off, the control module consumes more current than the driving module.

**3.** The apparatus of Claims 1 or 2 , further comprising a monitoring module configured
to monitor a status of the second power source while the first power source is off,
to switch on the first power source in response to a insufficiency in a remaining power of the second power source, and
to switch off the first power source in response to a sufficiency in the remaining power of the second power source.

**4.** The apparatus of any of Claims 1 to 3,
wherein the control module has a receiving module configured to receive information for manipulating the electronic apparatus.

**5.** A power control device for on/off-switching a first power source which is a main power source of an electronic apparatus, the device comprising:

> a control module having a receiving module configured to receive information for manipulating the electronic apparatus, and configured to control on/off-switching of the first power source; and
> a driving module configured to drive a current for on/off-switching the first power source under a control of the control module,
> wherein the control module and the driving module are operable on power sources which are independent of each other,
> wherein a minimum operative voltage of the control module is lower than a minimum operative voltage of the driving module, and
> wherein, while the first power source is off, the control module consumes more current than the driving module.

## FIG. 1

Block diagram:

- 99 — MANIPULATION DEVICE
- 10
- 97 — power plug
- 98 — antenna
- 100 — POWER SEC.
- 110 — POWER CONTROL SEC.
- 20 — BROADCAST WAVE PROCESSING SEC.
- 21 — EXTERNAL APPARATUS IF SEC.
- 31 — MANIPULATION UNIT
- 40 — SIGNAL PROCESSING CONTROL SEC.
- 51 — DISPLAY UNIT
- 52 — SPEAKERS
- TO INDIVIDUAL BLOCKS

*FIG. 2*

*FIG. 3*

```
              ┌─────────────────────┐
              │        START        │
              └─────────────────────┘
                         │
                         │                    S301
    ┌──────────►┌─────────────────────────────┐
    │           │       MONITOR VOLTAGE       │
    │           └─────────────────────────────┘
    │                        │
    │                        │                S302
    │                    ╱───────────╲
    │                  ╱   IS VOLTAGE   ╲
    │   YES         ╱  HIGHER THAN OR EQUAL ╲
    └──────────────   TO PREDETERMINED
                    ╲      VALUE?       ╱
                      ╲───────────────╱
                            │ NO          S303
                            │
              ┌─────────────────────────────┐
              │      TURN ON MAIN POWER      │
              └─────────────────────────────┘
                         │
              ┌─────────────────────┐
              │         END         │
              └─────────────────────┘
```

*FIG. 4*

```
            ┌─────────────────────────┐
            │          START          │
            └─────────────────────────┘
                         │                        S401
                         ▼
  ┌──────►┌─────────────────────────────────┐
  │       │        MONITOR  VOLTAGE          │
  │       └─────────────────────────────────┘
  │                      │                        S402
  │                      ▼
  │              ╱─────────────────╲
  │  NO         ╱ CHARGING COMPLETE? ╲
  └────────────◄                     ►
               ╲                   ╱
                ╲─────────────────╱          S403
                         │ YES
                         ▼
          ┌─────────────────────────────────┐
          │      TURN  OFF  MAIN  POWER      │
          └─────────────────────────────────┘
                         │
                         ▼
            ┌─────────────────────────┐
            │          END            │
            └─────────────────────────┘
```

*FIG. 5*

| CHARGING VOLTAGE | | Vb | 5 | [V] |
|---|---|---|---|---|
| CONTROL SEC. | | Vcc1 | 1.5～5 | [V] |
| | | △V1 | 3.5 | |
| | | VDET1 | 1.5 | |
| | | Icc1 | 100 | [μA] |
| RELAY DRIVING SEC. | | Vcc2 | 3.5～5 | [V] |
| | | △V2 | 1.5 | |
| | | VDET2 | 3.5 | |
| | | Icc2 | 0.01 | [μA] |

*FIG. 6*

**EP 2 408 088 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010143177 A

- JP 2004274897 A